# EUROPEAN PATENT APPLICATION

(11) **EP 4 485 627 A1**
(43) Date of publication of application: **01.01.2025**
(21) Application number: 24174134.7
(22) Date of filing: 03.05.2024
(51) Int. Cl.: H01M 10/658, H01M 50/209, H01M 50/367, H01M 50/383

(54) **BATTERY MODULE**

(30) Priority: 30.06.2023 KR 20230084878
(71) Applicant: Samsung SDI Co., Ltd., Yongin-si, Gyeonggi-do 17084 (KR)
(72) Inventor: Cho, Man Sik, 16678 Suwon-si, Gyeonggi-do (KR)
(74) Representative: Gulde & Partner

(57) **Abstract**

Disclosed in an example embodiment is a battery module includes: multiple battery cells arranged in a first direction; and an insulating sheet formed of an insulating material and including a middle portion covering a first surface of the multiple battery cells, the middle portion being formed with at least one cut line extending in a second direction.

## Description

### Field of the Invention

The present invention relates to a battery module.

### Description of the Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

Secondary batteries are widely used in small devices, such as portable electronics, as well as medium and large devices, such as electric vehicles and energy storage systems (ESS), for power generation and energy storage. In particular, in medium or large devices, multiple battery cells are electrically connected to each other to form a battery module in order to enhance output and/or capacity of the batteries.

During charging and discharging of the battery module or due to external impact on the battery module, some battery cells in the battery module can suffer from rapid increase in temperature, swelling, and sparking. Due to a densely packed structure of many battery cells, high temperature, gas, and sparks generated from some battery cells can rapidly spread to other battery cells in the vicinity and can easily cause a severe fire accident.

### Summary of the Invention

It is an aspect of the present invention to provide a battery module capable of suppressing spread of abnormal phenomena, such as high temperature, gas, and sparks generated in some battery cells, to other battery cells in the vicinity.

These and other aspects and features of the present invention will be described in or will be apparent from the following description of embodiments of the present invention.

In accordance with one aspect of the present invention, a battery module includes: multiple battery cells arranged in a first direction; and an insulating sheet formed of an insulating material and including a middle portion covering a first surface of the multiple battery cells, the middle portion being formed with at least one cut line extending in a second direction.

The cut line may include a plurality of through-holes formed through the middle portion in a thickness direction thereof and spaced apart from each other along a straight line extending in the second direction.

The cut line may be disposed to overlap a boundary line between a neighboring pair of battery cells among the multiple battery cells.

Each of the battery cells may include terminals formed on the first surface thereof and a terminal hole may be formed through the middle portion in a thickness direction thereof to expose each of the terminals through the middle portion.

Each of the battery cells may be formed on the first surface thereof with a vent, through which a gas generated inside the battery cell is released, and a vent hole may be formed through the middle portion in a thickness direction thereof to expose the vent through the middle portion.

The battery module may further include a holder covering the middle portion to prevent the middle portion from being lifted to a first side.

Opposite ends of the holder in the second direction may be brought into close contact with the middle portion.

The insulating sheet may further include a pair of sidewalls formed of an insulating material and extending downwards from opposite ends of the middle portion in the second direction to cover a pair of second surfaces of the multiple battery cells in the second direction.

The pair of sidewalls may be secured to the pair of second surfaces of the battery cells, respectively.

Each of the pair of sidewalls may be formed with at least one separation slit formed through the sidewall in a thickness direction and extending in a third direction thereof.

The separation slit may be disposed to overlap a boundary line between a neighboring pair of battery cells among the multiple battery cells.

The cut line and the separation slit may be connected to each other at the opposite ends of the middle portion.

The separation slit may be open to a lower end of the sidewall.

The separation slit may extend from each of the opposite ends of the middle portion to a lower end of the sidewall.

The battery module may further include: a pair of side plates facing the pair of sidewalls so as to cover the pair of sidewalls; and a holder covering the middle portion and coupled at opposite ends thereof in the second direction to the pair of side plates.

According to embodiments of the present invention, even in the event of abnormal phenomena, such as high temperature heating, gas generation, volume expansion, and spark generation, in some of multiple battery cells included in a battery module, the abnormal phenomena can be suppressed from spreading to other battery cells in the vicinity by the insulating sheet. As a result, propagation and spread of fire and explosion can be delayed, thereby reducing damage to human life and property.

According to embodiments of the invention, in the event of an abnormal phenomenon in some of the multiple battery cells included in the battery module, only a portion of the insulating sheet covering battery cells suffering from an abnormal phenomenon may be separated from the other portion thereof along a cut line and a portion of the insulating sheet covering other battery cells not suffering from the abnormal phenomenon may remain covering the battery cells. Accordingly, the spread of the abnormal phenomenon to the other battery cells in the vicinity can be more effectively suppressed.

In a battery module according to one embodiment in which the insulating sheet includes sidewalls, spread of heat and flame through side surfaces of the battery cell is suppressed by the sidewalls, whereby propagation and spread of fire and explosion can be further delayed.

However, aspects and features of the present invention are not limited to those described above and other aspects and features not mentioned will be clearly understood by a person skilled in the art from the detailed description, described below.

### Brief Description of the Drawings

The following drawings attached to this specification illustrate embodiments of the present invention, and further describe aspects and features of the present invention together with the detailed description of the present invention. Thus, the present invention should not be construed as being limited to the drawings:
FIG. 1 is a perspective view of a battery module according to a first embodiment of the present invention;
FIG. 2 is an exploded perspective view of the battery module according to the first embodiment of the present invention;
FIG. 3 is a cross-sectional view taken along line III-III of FIG. 1;
FIG. 4 is an enlarged view of portion IV of FIG. 3;
FIG. 5 is an enlarged view of portion V of FIG. 3;
FIG. 6 is a perspective view of multiple battery modules of FIG. 2;
FIG. 7 is a perspective view of an insulating sheet of FIG. 2, with a portion of the insulating sheet separated and lifted along a cut line;
FIG. 8 is a perspective view of a battery module according to a second embodiment of the present invention, showing a holder disassembled upwards to be spaced apart from a front frame, a rear frame, and a pair of side plates;
FIG. 9 is an exploded perspective view of the battery module according to the second embodiment of the present invention;
FIG. 10 is a cross-sectional view taken along line X-X of FIG. 8, showing the holder coupled to the front frame, the rear frame, and the pair of side plates;
FIG. 11 is an enlarged view of portion XI of FIG. 10;
FIG. 12 is an enlarged view of portion XII of FIG. 10; and
FIG. 13 is a perspective view of an insulating sheet of FIG. 9, with a portion of the insulating sheet separated and lifted along a cut line.

### Detailed Description of the Invention

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop

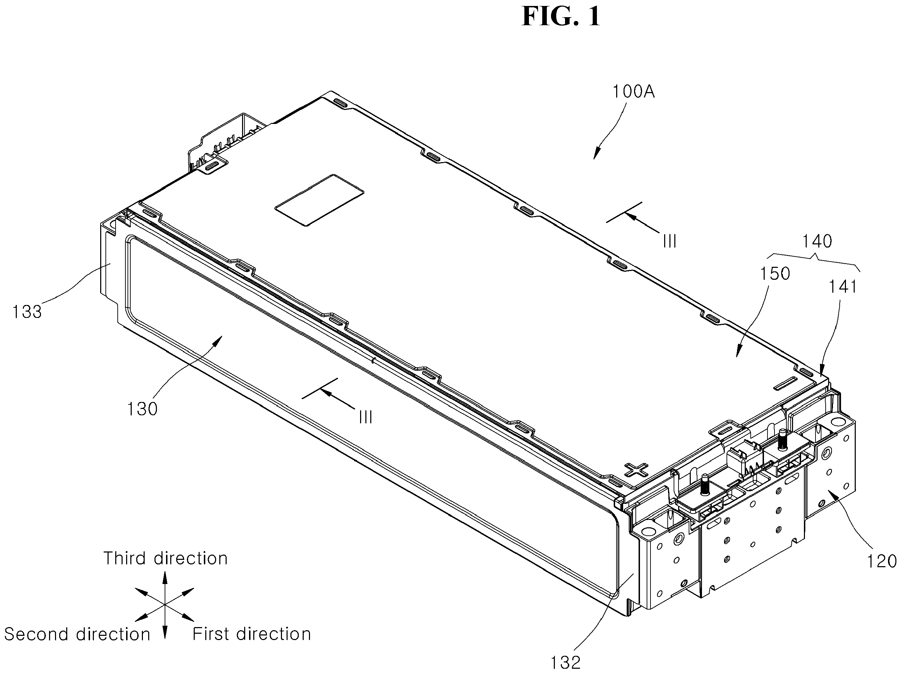

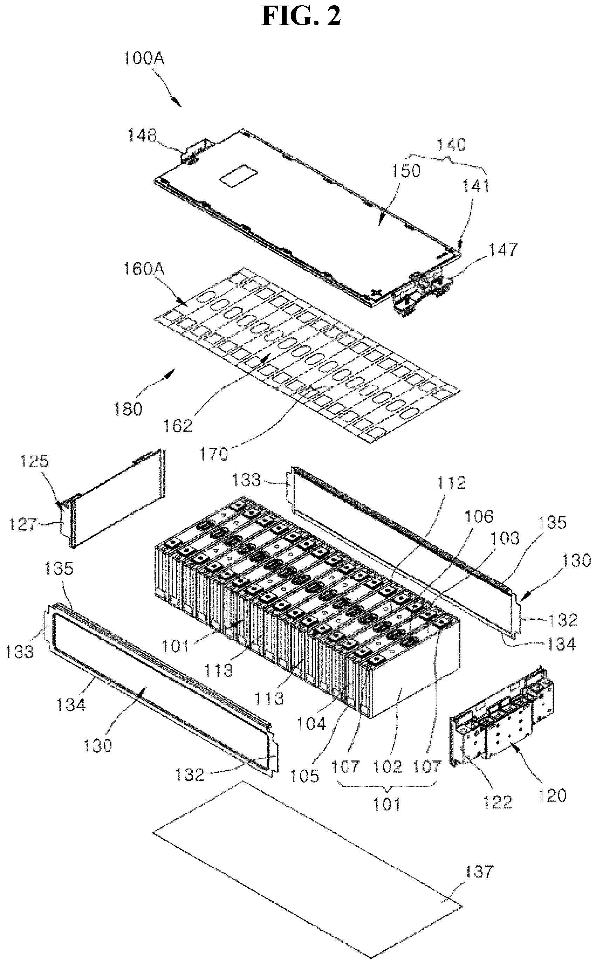

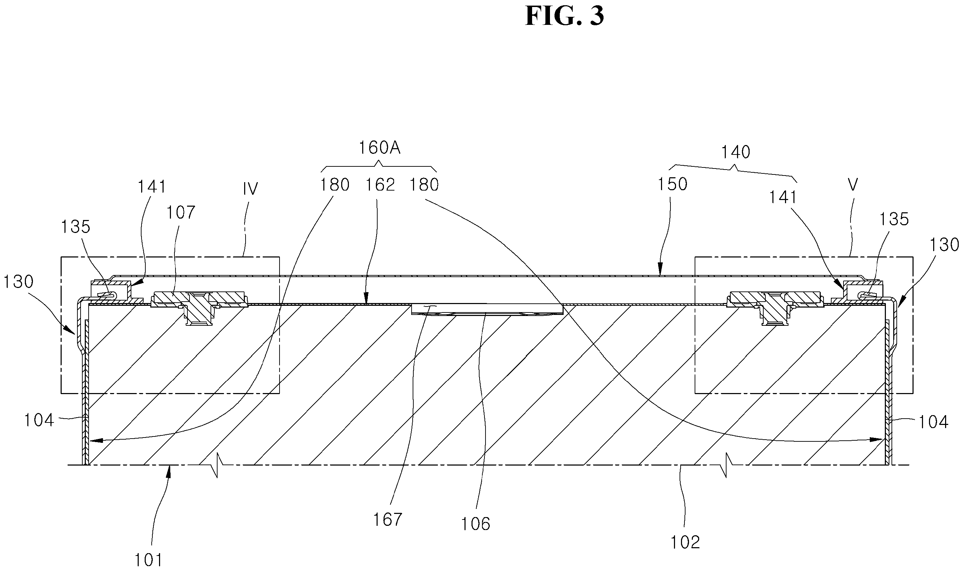

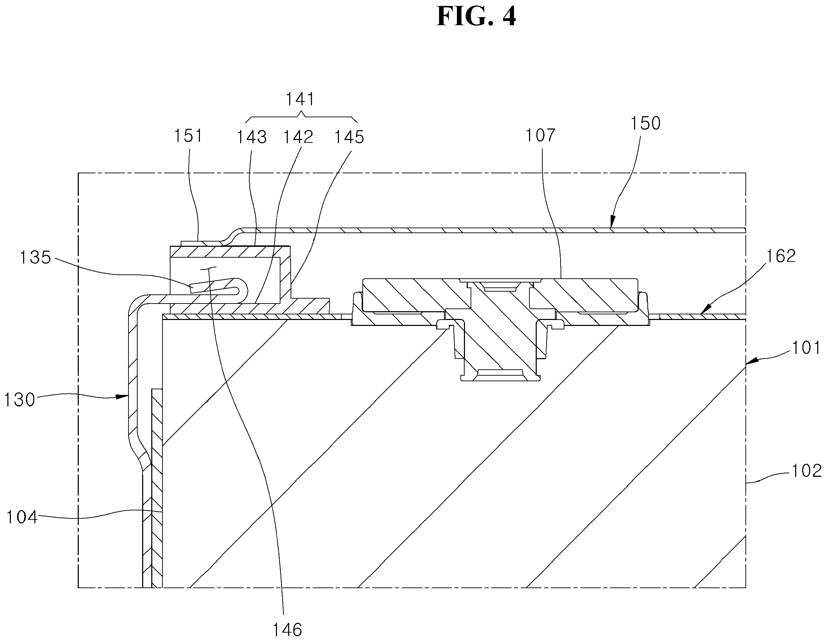

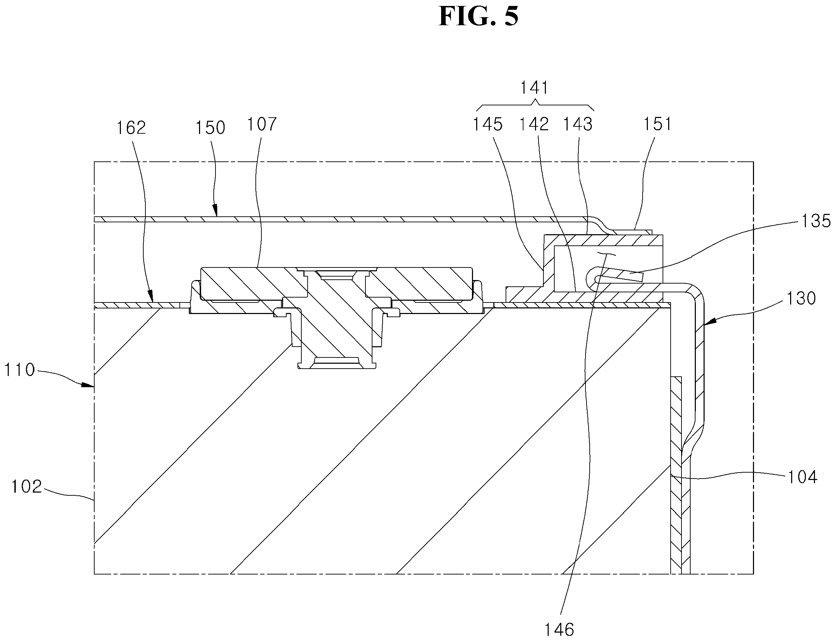

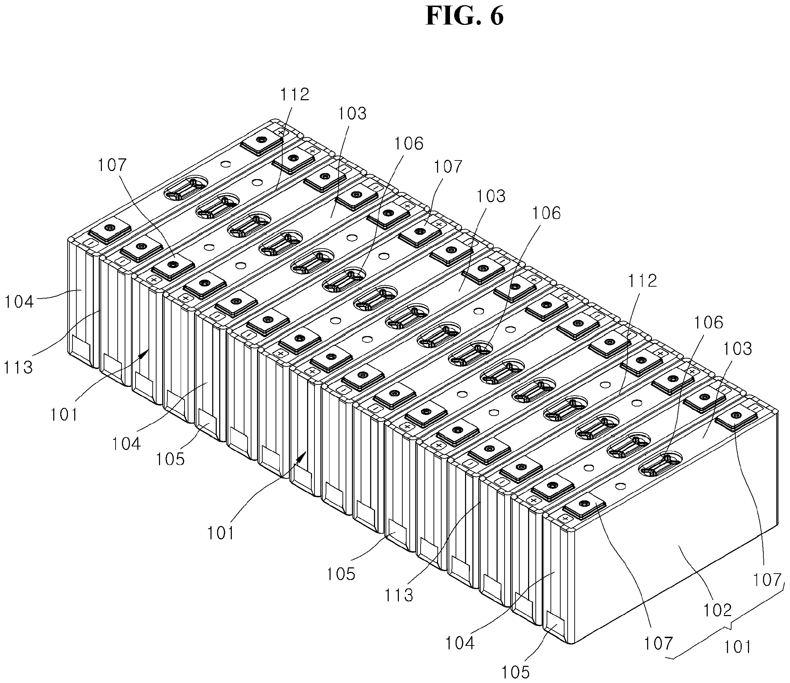

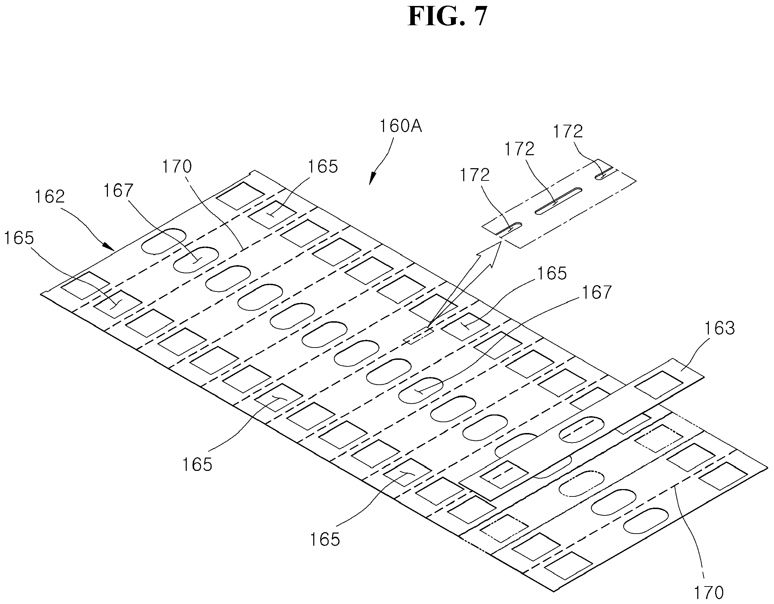

FIG. 1 is a perspective view of a battery module according to a first embodiment of the present invention; FIG. 2 is an exploded perspective view of the battery module according to the first embodiment of the present invention; FIG. 3 is a cross-sectional view taken along line III-III of FIG. 1; FIG. 4 is an enlarged view of portion IV of FIG. 3; FIG. 5 is an enlarged view of portion V of FIG. 3; FIG. 6 is a perspective view of multiple battery modules of FIG. 2; and FIG. 7 is a perspective view of an insulating sheet of FIG. 2, with a portion of the insulating sheet separated and lifted along a cut line.

Referring to FIGs. 1 to 7, a battery module 100A according to a first embodiment includes multiple battery cells 101 and an insulating sheet 160A. The battery cells 101 act as a unit structure that supplies and stores power in the battery module 100A.

Although not shown in the drawings, the battery cell 101 may be exemplified as a prismatic secondary cell provided therein with an electrode assembly (not shown), in which a cathode plate (not shown) and an anode plate (not shown) are disposed at opposite sides of a separator (not shown), to charge and discharge a preset quantity of electric power.

The battery cell 101 may include a cell body 102, a pair of terminals 107, and a vent 106. The cell body 102 may have a parallelepiped shape that has a smaller thickness in a first direction than a height in a third direction and a width in a second direction. Multiple battery cells 101 may be arranged in a row parallel to a thickness direction thereof, that is, in the first direction.

In the following embodiments, by way of example, the first direction will be described as a front-to-back direction, the second direction will be described as a left-to-right direction, and the third direction will be described as an up-down direction. However, it should be understood that the present invention is not limited thereto and various modifications are possible.

One of the pair of terminals 107 may be a cathode and the other may be an anode. The pair of terminals 107 may protrude from a first surface 103 of the cell body 102. In the following embodiments, by way of example, the first surface is described as an upper surface of the cell body 102. However, it should be understood that the present invention is not limited thereto and various modifications are possible.

The pair of terminals 107 may be spaced apart from each other and disposed respectively at opposite ends of the cell body 102 in the second direction orthogonal to the first and third directions.

The vent 106 may be formed on the first surface 103 of the cell body 102 to be disposed between the pair of terminals 107. Gases generated inside the battery cell 101, that is, inside the cell body 102, may be released outside through the vent 106. Although not shown in the drawings, the battery cell 101 may further include an electrode assembly received in the cell body 102 and a cap plate closing the first surface 103 to prevent leakage of a substance, such as an electrolyte, from the battery cell.

The insulating sheet 160A is a plate-shaped member formed of an insulating material. The insulating sheet 160A includes a middle portion 162 that covers the first surface 103 of the multiple battery cells 101 arranged in the first direction. The middle portion 162 may be formed with a plurality of cut lines 170 extending in the second direction.

Each of the plurality of cut lines 170 may be disposed to overlap a boundary line 112 between a neighboring pair of battery cells 101 among the multiple battery cells 101. Each boundary line between the neighboring pairs of battery cells 101 may be identified as a first surface boundary line 112 visible from the top of the multiple battery cells 101, a second surface boundary line 113 visible from one side of the multiple battery cells 101, and a third surface boundary line (not shown) visible from the bottom of the multiple battery cells 101.

In the following embodiments, by way of example, the second surface will be described as a left or right side of the cell body 102 and the third surface will be described as a lower surface of the cell body 102. However, it should be understood that the present invention is not limited thereto and various modifications are possible.

Specifically, among the first surface boundary lines 112, the second surface boundary lines 113, and the third surface boundary lines, the cut lines 170 formed in the middle portion 162 may be disposed to overlap the first surface boundary lines 112 in the up/down direction. The number of cut lines 170 formed in the middle portion 162 may be one less than the number of multiple battery cells 101 arranged in the first direction.

Each of the cut lines 170 may include a plurality of through-holes 172 formed through the middle portion 162 in a thickness direction thereof and spaced apart from each other along a straight line extending in the second direction orthogonal to the first and third directions. A length of each of the through-holes 172 in the second direction may be greater than a distance between a neighboring pair of through-holes 172.

The insulating sheet 160A may be formed with a plurality of terminal holes 165 and a plurality of vent holes 167. The plurality of terminal holes 165 may be formed through the middle portion 162 in the thickness direction to be aligned one-to-one with the plurality of terminals 107 in the third direction so as to expose the plurality of terminals 107 of the multiple battery cells 101 therethrough.

The plurality of vent holes 167 may be formed through the middle portion 162 in the thickness direction thereof to be aligned one-to-one with the plurality of vents 106 in the third direction so as to expose the plurality of vents 106 of the multiple battery cells 101 therethrough.

The battery module 100A may further include a front frame 120, a rear frame 125, a pair of side plates 130, a bottom plate 137, and a holder 140. The front frame 120 may be disposed in front of the multiple battery cells 101 to shield a front side of the most forwardly located battery cell among the multiple battery cells 101 arranged in the first direction.

The rear frame 125 may be disposed at the back of the multiple battery cells 101 to shield a rear side of the most backwardly located battery cell 101 among the multiple battery cells 101 arranged in the first direction.

The pair of side plates 130 may be disposed to face opposite sides, second surfaces 104 of the multiple battery cells 101 in the second direction while shielding the second surfaces 104 thereof, respectively. The pair of side plates 130 may be coupled at front ends 132 thereof to opposite sides 122 of the front frame 120 in the second direction by, for example, welding, deposition of a bonding agent, or the like, respectively.

The pair of side plates 130 may be coupled at rear ends 133 thereof to opposite sides 127 of the rear frame 125 in the second direction by, for example, welding, deposition of a bonding agent, or the like, respectively.

The bottom plate 137 may shield the third surface of the multiple battery cells 101 while supporting the third surface thereof. The pair of side plates 130 may be coupled at lower ends 134 thereof to opposite ends of the bottom plate 137 in the second direction by, for example, welding, deposition of a bonding agent, or the like.

The multiple battery cells 101 included in the battery module 100A may be received in an interior space defined by the front frame 120, the rear frame 125, the bottom plate 137, and the pair of side plates 130.

The holder 140 may be placed on the insulating sheet 160A so as to cover the middle portion 162 of the insulating sheet 160A. The holder 140 may prevent the middle portion 162 from being lifted to a first side when the middle portion 162 is pressurized in a direction of being lifted due to an abnormal phenomenon in the multiple battery cells 101.

The holder 140 may include a holder frame 141 and a top plate 150. In the embodiment shown in the drawings, the first side is shown as an upper side by way of example. However, it should be understood that the present invention is not limited thereto and various modifications are possible.

The holder frame 141 may extend along a rectangular path, like a window frame. The holder frame 141 may include a lower plate 142, an upper plate 143, and a connection wall 145. The lower plate 142 and the upper plate 143 may extend in the first direction. The upper plate 143 may be disposed above the lower plate 142 to be spaced apart from the lower plate 142. The connection wall 145 connects inner ends of the lower plate 142 and the upper plate 143 to each other and may extend in the first direction.

The lower plate 142, the upper plate 143, and the connection wall 145 may define an elongated groove 146, which is open at opposite sides thereof in the second direction and extends in the first direction, in the holder 140. The top plate 150 may shield the terminals 107 and the insulating sheet 160A from being exposed. An outer periphery 151 of the top plate 150 may be bonded to the upper plate 143 by, for example, depositing a bonding agent, such that the top plate 150 can be coupled to the holder frame 141.

The holder frame 141 may be provided at a front end thereof with a front frame coupler 147 and at a rear end thereof with a rear frame coupler 148. The front frame coupler 147 may be coupled to the front frame 120 and the rear frame coupler 148 may be coupled to the rear frame 127. Accordingly, the holder 140 may be fixedly coupled at the front and rear ends thereof to the front frame 120 and the rear frame 125.

Each of the side plates 130 may include a bent upper end 135 that is bent and extends inwardly of the battery cell 101. The bent upper end 135 may be inserted into the elongated groove 146 of the holder frame 141 and may be brought into close contact with an upper surface of the lower plate 142. Accordingly, the holder 140 may be coupled at the opposite sides thereof to the pair of side plates 130 in the second direction so as not to be separated therefrom.

Opposite ends of the holder 140 in the second direction may be brought into close contact with the middle portion 162. Specifically, a lower surface of the lower plate 142 may be brought into close contact with opposite sides of the middle portion 162 of the insulating sheet 160A in the second direction. Other portions of the middle portion 162 excluding the opposite ends thereof in the second direction may be spaced apart from the holder 140.

For the battery module 100A described above, even if abnormal phenomena, such as high temperature heating, gas generation, volume expansion, and spark generation, occur in some battery cells 101 among the multiple battery cells 101, spread of the abnormal phenomena to other battery cells 101 in the vicinity can be suppressed by the insulating sheet 160A, which covers the first surface 103 of the battery cells 101.

Since the holder 140 including the holder frame 141, which is brought into close contact with the opposite ends of the middle portion 162 in the second direction, prevents the middle portion 162 from being lifted, propagation and spread of fire and explosion in the battery module 100A can be delayed, thereby reducing damage to human life and property.

When an abnormal phenomenon occurs in some battery cells 101 in the battery module 100A, only a portion 163 of the middle portion 162 covering the battery cells 101 suffering from the abnormal phenomenon is separated from other portions of the insulating sheet 160A along the cut line 170, and other portions of the insulating sheet 160A, which cover other battery cells 101 not suffering from the abnormal phenomenon, may remain covering the other battery cells 101. Thus, spread of the abnormal phenomenon to other battery cells 101 in the vicinity can be more effectively suppressed.

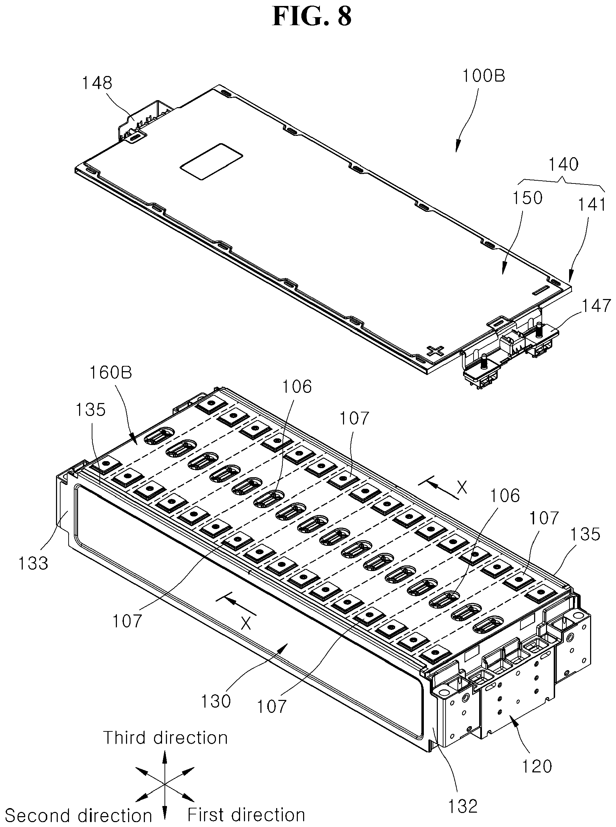

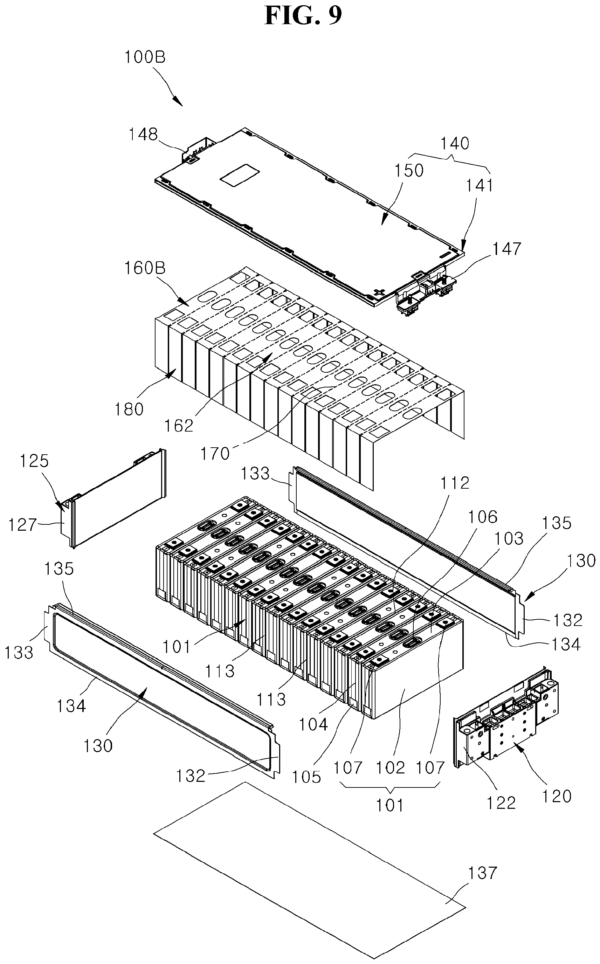

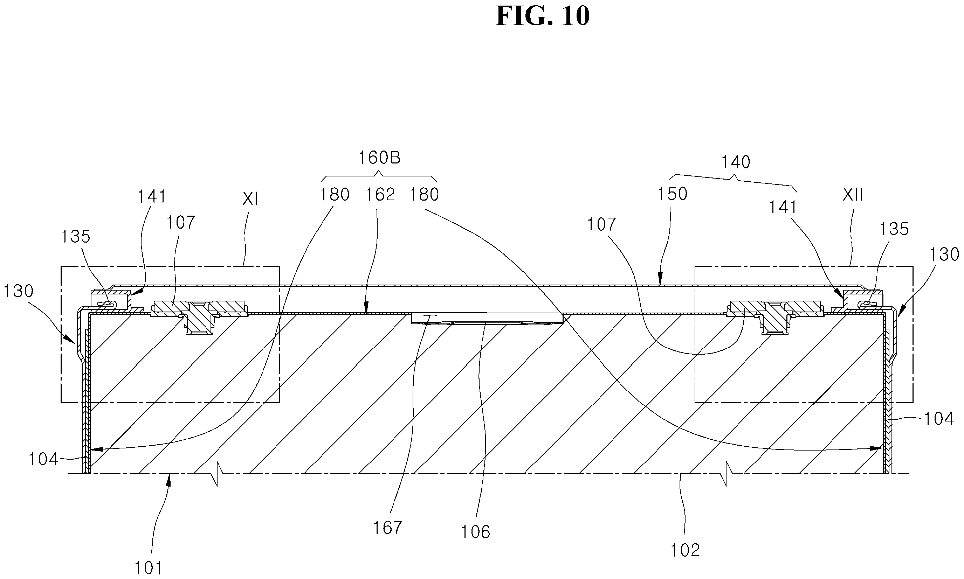

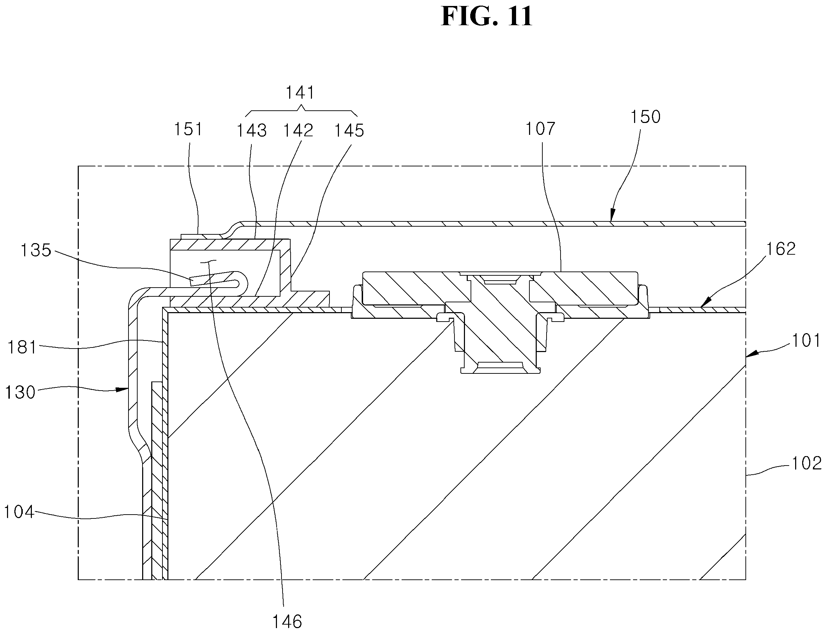

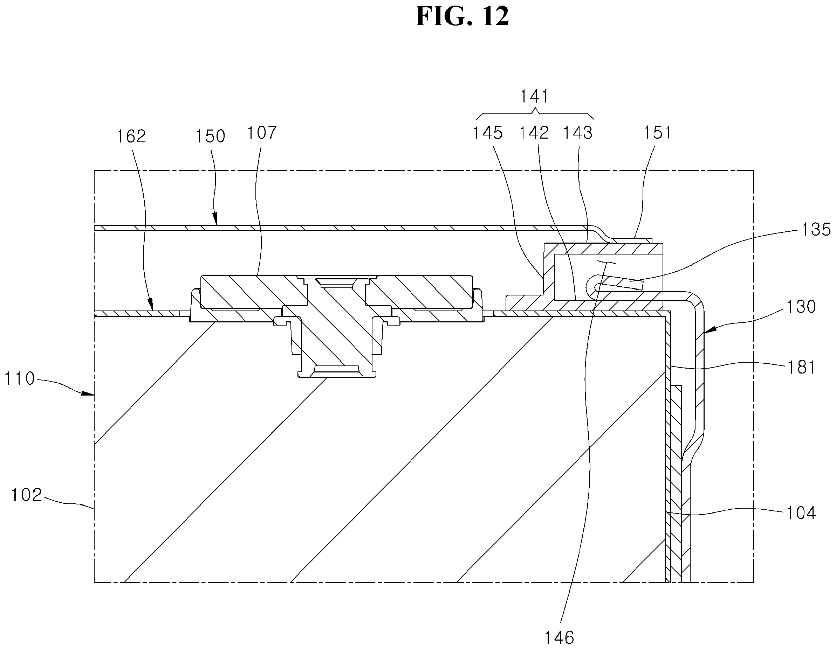

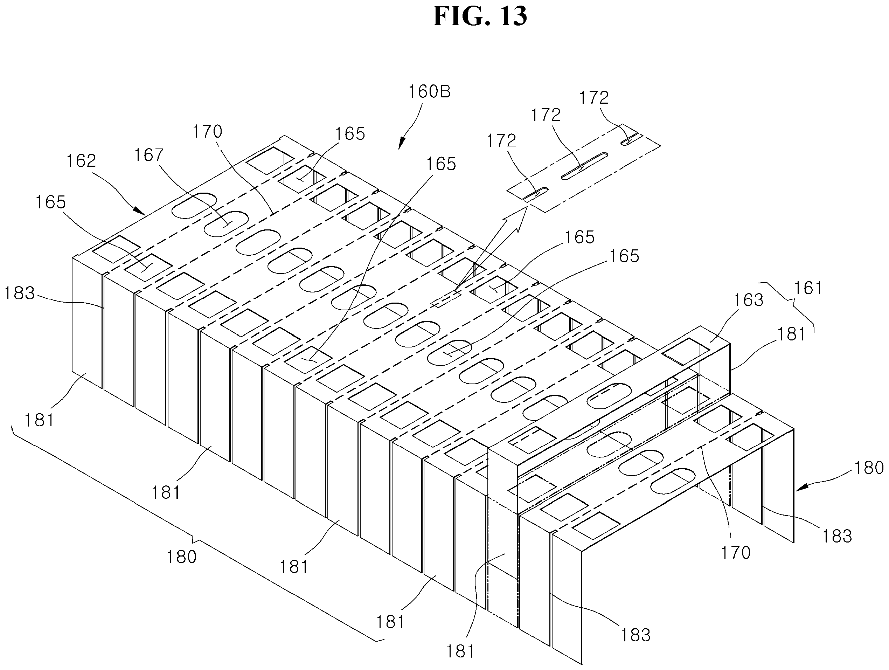

FIG. 8 is a perspective view of a battery module according to a second embodiment of the present invention, showing a holder disassembled upwards to be spaced apart from a front frame, a rear frame, and a pair of side plates; FIG. 9 is an exploded perspective view of the battery module according to the second embodiment of the present invention; FIG. 10 is a cross-sectional view taken along line X-X of FIG. 8, showing the holder coupled to the front frame, the rear frame, and the pair of side plates; FIG. 11 is an enlarged view of portion XI of FIG. 10; FIG. 12 is an enlarged view of portion XII of FIG. 10; and FIG. 13 is a perspective view of an insulating sheet of FIG. 9, with a portion of the insulating sheet separated and lifted along a cut line.

Referring to FIGs. 8 to 13, a battery module 100B according to a second embodiment includes multiple battery cells 101 and an insulating sheet 160B. The multiple battery cells 101 are the same as the battery cells 101 in the battery module 100A according to the first embodiment shown in FIGs. 1 to 8, and are denoted by the same reference numerals as the battery cells 101 according to the first embodiment. Therefore, repeated description of the same components will be omitted.

The insulating sheet 160B is a plate-shaped member formed of an insulating material. The insulating sheet 160B may include a middle portion 162 and a pair of sidewalls 180.

The middle portion 162 may be formed of an insulating material. The middle portion 162 covers a first surface 103 of the multiple battery cells 101 arranged in the first direction. The middle portion 162 may be formed with a plurality of cut lines 170 extending in the second direction.

Each of the plurality of cut lines 170 may be disposed to overlap a boundary line 112, specifically a first surface boundary line 112, between a neighboring pair of battery cells 101 among the multiple battery cells 101. The number of cut lines 170 formed in the middle portion 162 may be one less than the number of multiple battery cells 101 arranged in the first direction.

Each of the cut lines 170 may include a plurality of through-holes 172 formed through the middle portion 162 in a thickness direction thereof and spaced apart from each other along a straight line extending in the second direction orthogonal to the first and third directions. A length of each of the through-holes 172 in the second direction may be greater than a distance between a neighboring pair of through-holes 172.

The insulating sheet 160B may be formed with a plurality of terminal holes 165 and a plurality of vent holes 167. The plurality of terminal holes 165 may be formed through the middle portion 162 in the thickness direction to be aligned one-to-one with the plurality of terminals 107 in the third direction so as to expose the plurality of terminals 107 of the multiple battery cells 101 therethrough.

The plurality of vent holes 167 may be formed through the middle portion 162 in the thickness direction thereof to be aligned one-to-one with the plurality of vents 106 in the third direction so as to expose the plurality of vents 106 of the multiple battery cells 101 therethrough.

The pair of sidewalls 180 may extend downwards from opposite ends of the middle portion 162 so as to cover a pair of second surfaces 104 of the multiple battery cells 101 arranged in the first direction, in which the pair of second surfaces 104 is provided in the second direction. The pair of sidewalls 180 may be formed of the same insulating material as the middle portion 162. The middle portion 162 and the pair of sidewalls 180 may be integrally molded or fabricated.

Each of the pair of sidewalls 180 may be formed with a plurality of separation slits 183 that are formed through the corresponding sidewall 180 in a thickness direction thereof and extend in the third direction orthogonal to the first and second directions.

Each of the separation slits 183 may be disposed to overlap a boundary line 113, specifically a second surface boundary line 113, between a neighboring pair of battery cells 101 among the multiple battery cells 101 in the second direction.

The cut lines 170 may be connected to the separation slits 183 at the opposite ends of the middle portion 162 in the second direction. The separation slits 183 may be open to a lower end of the sidewall 180. The number of separation slits 183 in each sidewall 180 may be one less than the number of multiple battery cells 101 arranged in the first direction.

With this configuration, each of the sidewalls 180 may be divided into a number of sidewall pieces 181, the number of which is equal to the number of multiple battery cells 101. The plurality of sidewall pieces 181 belonging to one sidewall 180 may be arranged in the first direction.

The pair of sidewalls 180 may be secured to a pair of second surfaces 104 of the multiple battery cells 101, in which the second surfaces 104 are provided in the second direction. Specifically, the pair of second surfaces 104 of the multiple battery cells 101 may be bonded at lower ends 105 thereof (see FIG. 9) to inner surfaces of the plurality of sidewall pieces 181 by, for example, deposition of a bonding agent.

The battery module 100B may further include a front frame 120, a rear frame 125, a pair of side plates 130, a bottom plate 137, and a holder 140. The front frame 120, the rear frame 125, the pair of side plates 130, the bottom plate 137, and the holder 140 are the same as those of the battery module 100A according to the first embodiment shown in FIGs. 1 to 8 and are denoted by the same reference numerals. Therefore, repeated description thereof will be omitted.

In this embodiment, however, the pair of side plates 130 may be disposed to face the pair of sidewalls 180 so as to cover the pair of sidewalls 180 instead of directly facing the pair of second surfaces 104 of the multiple battery cells 101.

According to the second embodiment, since spread of heat and flame through the pair of second surfaces 104 of the multiple battery cells 101 is suppressed by the sidewalls 180 of the insulating sheet, the battery module 100B can further suppress spread of an abnormal phenomenon while further delaying propagation and spread of fire and explosion than the battery module 100A according to the first embodiment.

When the sidewalls 180 of the insulating sheet 160B are secured to the pair of second surfaces 104 of the multiple battery cells 101, the insulating sheet 160B is secured to the battery cells 101 with stronger force than the insulating sheet 160A according to the first embodiment and thus can be more efficiently suppressed from being lifted upwards from the battery cell 101 even in the event of an abnormal phenomenon in some of the multiple battery cells 101. Therefore, propagation and spread of fire and explosion in the battery module 100B can be further delayed.

Nevertheless, if an abnormal phenomenon occurs in some battery cells 101 of the battery module 100B, only a portion 163 of the middle portion 162 covering the battery cells 101 suffering from the abnormal phenomenon is separated from other portions of the insulating sheet 160A along the cut line 170, and other portions of the insulating sheet 160A, which cover other battery cells 101 not suffering from the abnormal phenomenon, may remain covering the other battery cells 101.

A portion 161 of the insulating sheet 160B separated along the cut line 170 may include a section 162 in the middle portion 162 and a pair of sidewalls pieces 181 extending from opposite ends of the section 163. Accordingly, spread of an abnormal phenomenon to other battery cells 101 can be more effectively suppressed.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and equivalents thereto.

## Claims

1. A battery module comprising:
multiple battery cells arranged in a first direction; and
an insulating sheet formed of an insulating material and comprising a middle portion covering a first surface of the multiple battery cells, the middle portion being formed with at least one cut line extending in a second direction.

2. The battery module according to claim 1, wherein the cut line comprises a plurality of through-holes formed through the middle portion in a thickness direction thereof and spaced apart from each other along a straight line extending in the second direction.

3. The battery module according to claim 1, wherein the cut line is disposed to overlap a boundary line between a neighboring pair of battery cells among the multiple battery cells.

4. The battery module according to claim 1, wherein each of the battery cells comprises terminals formed on the first surface thereof and a terminal hole is formed through the middle portion in a thickness direction thereof to expose each of the terminals through the middle portion.

5. The battery module according to claim 1, wherein each of the battery cells is formed on the first surface thereof with a vent, through which a gas generated inside the battery cell is released, and a vent hole is formed through the middle portion in a thickness direction thereof to expose the vent through the middle portion.

6. The battery module according to claim 1, further comprising: a holder covering the middle portion to prevent the middle portion from being lifted to a first side.

7. The battery module according to claim 6, wherein opposite ends of the holder in the second direction are brought into close contact with the middle portion.

8. The battery module according to claim 1, wherein the insulating sheet further comprises a pair of sidewalls formed of an insulating material and extending downwards from opposite ends of the middle portion in the second direction to cover a pair of second surfaces of the multiple battery cells in the second direction.

9. The battery module according to claim 8, wherein the pair of sidewalls is secured to the pair of second surfaces of the battery cells, respectively.

10. The battery module according to claim 8, wherein each of the pair of sidewalls is formed with at least one separation slit formed through the sidewall in a thickness direction and extending in a third direction thereof.

11. The battery module according to claim 10, wherein the separation slit is disposed to overlap a boundary line between a neighboring pair of battery cells among the multiple battery cells.

12. The battery module according to claim 11, wherein the cut line and the separation slit are connected to each other at the opposite ends of the middle portion.

13. The battery module according to claim 11, wherein the separation slit is open to a lower end of the sidewall.

14. The battery module according to claim 11, wherein the separation slit extends from each of the opposite ends of the middle portion to a lower end of the sidewall.

15. The battery module according to claim 8, further comprising:
a pair of side plates facing the pair of sidewalls so as to cover the pair of sidewalls; and
a holder covering the middle portion and coupled at opposite ends thereof in the second direction to the pair of side plates.
